(19) Europäisches Patentamt / European Patent Office / Office européen des brevets

(11) **EP 3 504 683 B1**

(12) **FASCICULE DE BREVET EUROPEEN**

(45) Date de publication et mention
de la délivrance du brevet:
**29.04.2020 Bulletin 2020/18**

(21) Numéro de dépôt: **17771801.2**

(22) Date de dépôt: **29.08.2017**

(51) Int Cl.:
***G06T 7/73*** *(2017.01)*     ***G06T 7/246*** *(2017.01)*

(86) Numéro de dépôt international:
**PCT/FR2017/052301**

(87) Numéro de publication internationale:
**WO 2018/042122 (08.03.2018 Gazette 2018/10)**

(54) **PROCÉDÉ DE DÉTERMINATION DE LA POSE DE LA TÊTE D'UN CONDUCTEUR DE VÉHICULE**

VERFAHREN ZUR BESTIMMUNG DER POSITIONIERUNG DES KOPFES EINES FAHRZEUGFAHRERS

METHOD FOR DETERMINING THE PLACEMENT OF THE HEAD OF A VEHICLE DRIVER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.08.2016 FR 1658008**

(43) Date de publication de la demande:
**03.07.2019 Bulletin 2019/27**

(73) Titulaires:
• **Renault s.a.s.**
**92513 Boulogne Bilancourt Cedex (FR)**
• **Université Jean Monnet de Saint-Etienne**
**42023 Saint Etienne Cedex 2 (FR)**
• **Centre National de la Recherche Scientifique**
**75016 Paris 16 (FR)**

(72) Inventeurs:
• **BOLE, Samuel**
**91440 Bures-sur-Yvette (FR)**
• **LAVERGNE, Christophe**
**92600 Asnières (FR)**
• **LEPINE, Thierry**
**42570 Saint-Heand (FR)**
• **FOURNIER, Corinne**
**42000 Saint-Etienne (FR)**

(74) Mandataire: **Jacobacci Coralis Harle**
**32, rue de l'Arcade**
**75008 Paris (FR)**

(56) Documents cités:
• **KATO T ET AL: "Detection of driver's posture in the car by using far infrared camera", INTELLIGENT VEHICLES SYMPOSIUM, 2004 IEEE PARMA, ITALY JUNE 14-17, 2004, PISCATAWAY, NJ, USA,IEEE, 14 juin 2004 (2004-06-14), pages 339-344, XP010727493, DOI: 10.1109/IVS.2004.1336406 ISBN: 978-0-7803-8310-4**
• **MURPHY-CHUTORIAN E ET AL: "Head Pose Estimation in Computer Vision: A Survey", IEEE TRANSACTIONS ON PATTERN ANALYSIS AND MACHINE INTELLIGENCE, IEEE COMPUTER SOCIETY, USA, vol. 30, no. 4, 1 avril 2009 (2009-04-01), pages 607-626, XP011246884, ISSN: 0162-8828**
• **CASCIA LA M ET AL: "FAST, RELIABLE HEAD TRACKING UNDER VARYING ILLUMINATION: AN APPROACH BASED ON REGISTRATION OF TEXTURE-MAPPED 3D MODELS", IEEE TRANSACTIONS ON PATTERN ANALYSIS AND MACHINE INTELLIGENCE, IEEE COMPUTER SOCIETY, USA, vol. 22, no. 4, 1 avril 2000 (2000-04-01), pages 322-336, XP000949716, ISSN: 0162-8828, DOI: 10.1109/34.845375**

**Description**

DOMAINE TECHNIQUE AUQUEL SE RAPPORTE L'INVENTION

La présente invention concerne de manière générale le domaine des véhicules.

Elle concerne plus particulièrement un procédé de détermination de la pose (c'est-à-dire de la position et de l'orientation) de la tête d'un conducteur de véhicule selon la revendication 1. Des mode de réalisation préférés sont décrits dans les revendications 2 à 7.

ARRIERE-PLAN TECHNOLOGIQUE

Actuellement, on souhaite connaître la pose de la tête d'un conducteur de véhicule automobile pour différentes raisons.

L'une de ces raisons est que ce paramètre permet de sécuriser la conduite du véhicule, puisqu'il permet par exemple de détecter un assoupissement du conducteur ou un défaut d'inattention alors qu'un obstacle a été détecté.

Une autre de ces raisons est que ce paramètre permet d'optimiser l'agrément du véhicule, par exemple en permettant au conducteur de commander certaines fonctionnalités du véhicule (par exemple la fonction de téléphonie) à l'aide de mouvements de tête.

L'une des contraintes de l'industrie automobile est que le système permettant de déterminer la pose de la tête du conducteur doit pouvoir fonctionner sans contact. Par conséquent, on cherche à estimer cette pose grâce à une caméra orientée vers le conducteur.

On connaît ainsi du document US2013/0057671 un procédé de détermination tel que défini en introduction, dans lequel il est prévu de déterminer l'état de somnolence ou d'éveil du conducteur au moyen d'une caméra filmant le visage du conducteur et d'un capteur de luminosité ambiante permettant d'éviter toute fausse interprétation de la fermeture des yeux du conducteur lorsque ce dernier est ébloui.

On observe que ce procédé présente une fiabilité parfois discutable dans certaines conditions d'utilisation (notamment lorsque la luminosité ambiante est très réduite ou trop importante) ou selon l'origine du conducteur (notamment en fonction de sa couleur de peau).

Il est connu en outre du document "Détection of driver's posture in the car by using far infrared caméra" par Takashi KATO et al. publié à la conférence IEEE INTELLIGENT VEHICLES SYMPOSIUM qui s'est tenue du 14 au 17 juin 2004 à Parme en Italie une méthode d'estimation de la pose de la tête d'un conducteur de véhicule utilisant des images infrarouges où des points d'intérêt du visage tels que le nez ou la bouche sont extraits pour déterminer la pose.

OBJET DE L'INVENTION

Afin de remédier aux inconvénients précités de l'état de la technique, la présente invention propose un nouveau procédé qui permet d'obtenir une estimation fiable de la pose de la tête du conducteur, quelles que soient les conditions d'illumination (jour, nuit, soleil rasant, variations brusques de luminosité extérieure...) et quelle que soit l'origine du conducteur, tout en garantissant la sécurité et le confort oculaire du conducteur.

Plus particulièrement, on propose selon l'invention un procédé de détermination tel que défini dans l'introduction, dans lequel, à l'étape a), l'image du conducteur est acquise dans le domaine des longueurs d'ondes infrarouges thermiques.

Ce domaine infrarouge est compris entre 8000 et 14000 nm. Il est préféré aux autres domaines de longueurs d'ondes pour les raisons suivantes.

Comme on le sait, un rayonnement incident sur une surface peut être absorbé et/ou réfléchi et/ou transmis, en différentes proportions.

La peau étant un matériau opaque dans le visible et l'infrarouge, elle ne fait qu'absorber et/ou réfléchir les rayonnements incidents.

Dans les domaines visibles et proche infrarouge, la peau est un bon réflecteur. Par conséquent, les variations du rayonnement environnant (notamment celui du soleil) auront une grande influence sur l'apparence du visage du conducteur vu par une caméra dans ces longueurs d'onde.

Le demandeur a observé que dans le domaine infrarouge thermiques (à ondes longues), la peau humaine se comportait d'une manière proche d'un corps noir, si bien qu'elle réfléchit très peu cette lumière infrarouge à ondes longues. De ce fait, les variations du rayonnement environnant (notamment celui du soleil) auront une influence très réduite sur l'apparence du visage du conducteur vu par une caméra dans ces longueurs d'onde.

Par ailleurs, puisque les processus biologiques internes du corps humain régulent la température de la peau dans une gamme relativement restreinte, l'apparence du visage humain retrouvera rapidement son état stable après une séance de sport.

Enfin, la couleur de la peau ne faisant pas ou peu varier les propriétés d'émissivité et d'absorption de la peau, les résultats obtenus ne varieront pas ou peu quelle que soit l'origine du conducteur, et qu'il soit ou non bronzé.

En résumé, l'utilisation du domaine infrarouge thermique pour acquérir des images du visage du conducteur permet d'obtenir des résultats qui ne varient pas ou que légèrement, quels que soient les conditions de luminosité ambiante, les conditions physiologiques et l'apparence physique du conducteur.

Les images obtenues sont de ce fait bien exploitables. Elles peuvent en outre être facilement comparées à des images précédemment acquises dans d'autres conditions, sans problème aucun.

Des caractéristiques avantageuses et non limitatives d'un premier mode de réalisation du procédé de détermination conforme à l'invention sont les suivantes :

- les étapes a) et b) sont successivement mises en œuvre à intervalles déterminés, de manière à déterminer les mouvements successifs de la tête du conducteur, et, à l'étape c), la pose de la tête du conducteur est déterminée compte tenu des mouvements successifs de la tête du conducteur depuis une pose connue ;
- pour déterminer chacun des mouvements successifs de la tête du conducteur au moyen de deux images successivement acquises, il est prévu de détecter, parmi les points particuliers repérés sur l'une desdites deux images, ceux qui correspondent aux mêmes points de la tête du conducteur que des points particuliers de l'autre des images, ces points particuliers étant qualifiés de appariés, puis de réaliser une estimation du mouvement de la tête du conducteur entre les deux images en fonction du changement de position d'une partie au moins des points particuliers appariés depuis l'une jusqu'à l'autre des deux images ;
- il est prévu de réaliser plusieurs estimations du mouvement de la tête du conducteur entre lesdites deux images, en considérant à chaque fois un ensemble différent de points particuliers appariés, puis de sélectionner la meilleure estimation du mouvement de la tête du conducteur ;
- pour sélectionner la meilleure estimation du mouvement de la tête du conducteur, on applique, pour chaque estimation réalisée, le mouvement estimé à l'ensemble des points particuliers d'une image qui sont appariés à un point particulier de l'image successive, afin d'obtenir des points estimés, on détermine des écarts de position entre chacun des points estimés et le point particulier correspondant de l'image successive, on calcule, en fonction des écarts déterminés, une erreur associée à l'estimation considérée, et on sélectionne l'estimation pour laquelle l'erreur est la plus faible.

Des caractéristiques avantageuses et non limitatives d'un second mode de réalisation du procédé de détermination conforme à l'invention sont les suivantes :

- il est prévu une phase préalable d'initialisation au cours de laquelle on acquiert une modélisation tridimensionnelle de la tête du conducteur (ou bien on utilise un modèle tridimensionnelle générique), on applique une texture sur une partie au moins de ladite modélisation tridimensionnelle, compte tenu d'au moins une image acquise de la tête du conducteur, et on stocke dans une mémoire informatique des données issues de ladite modélisation tridimensionnelle texturée, et à l'étape c), on compare les points particuliers repérés à l'étape b) avec les données stockées dans la mémoire informatique pour en déduire la pose de la tête du conducteur ;
- préalablement au stockage de données dans ladite mémoire informatique, il est prévu de générer une pluralité d'images de synthèse bidimensionnelles, correspondant à la projection de ladite modélisation tridimensionnelle texturée dans une pluralité de plans inclinés les uns par rapport aux autres, de repérer des points particuliers de la tête du conducteur sur chaque image de synthèse, et il est prévu de stocker, dans des enregistrements distincts de ladite mémoire informatique chacun associés à l'une desdites images de synthèse, des données caractéristiques des points particuliers repérés sur l'image de synthèse associée ;
- à l'étape b), il est prévu de déterminer des données caractéristiques des points particuliers repérés sur l'image acquise à l'étape a), et à l'étape c), il est prévu de comparer les données caractéristiques déterminées à l'étape b) avec les données caractéristiques stockées dans chaque enregistrement de ladite mémoire informatique, puis de sélectionner l'enregistrement pour lequel les données caractéristiques stockées correspondent le mieux aux données caractéristiques déterminées à l'étape b), et d'en déduire une estimation de la pose de la tête du conducteur ;
- la comparaison des données caractéristiques déterminées à l'étape b) avec les données caractéristiques stockées dans chaque enregistrement de ladite mémoire informatique consiste à détecter, parmi les points particuliers repérés sur la ou les images acquise(s) à l'étape a), ceux qui correspondent aux mêmes points de la tête du conducteur que des points particuliers repérés sur chaque image de synthèse correspondante, ces points particuliers étant qualifiés de appariés, puis l'enregistrement est sélectionné en fonction au moins du nombre de points particuliers appariés sur chaque image de synthèse (éventuellement aussi en fonction de la moyenne des niveaux de gris des pixels alentours, de la norme et de l'orientation du vecteur d'appariement).

DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :

- la figure 1 est une vue schématique de la tête d'un conducteur représentée dans deux positions différentes, et d'une caméra thermique ;
- la figure 2 est un schéma géométrique illustrant les différents repères qui seront utilisés dans la description du procédé de détermination conforme à l'invention ;
- la figure 3A est une vue schématique d'une modélisation tridimensionnelle de la tête du conducteur de la figure 1, sur laquelle apparaît également la caméra thermique de la figure 1 ;
- la figure 3B est une vue de détail de la zone III de la figure 3A ;
- les figures 4A, 4B et 4C sont des images acquises du visage du conducteur, dans trois positions différentes sur lesquelles est projeté le modèle tridimensionnel.

Dans la suite de cet exposé, on considérera qu'un conducteur conduit ou pilote un véhicule automobile (voiture, avion, ...). L'objet du procédé qui sera décrit en détail dans la suite sera de déterminer la posture de la tête du conducteur.

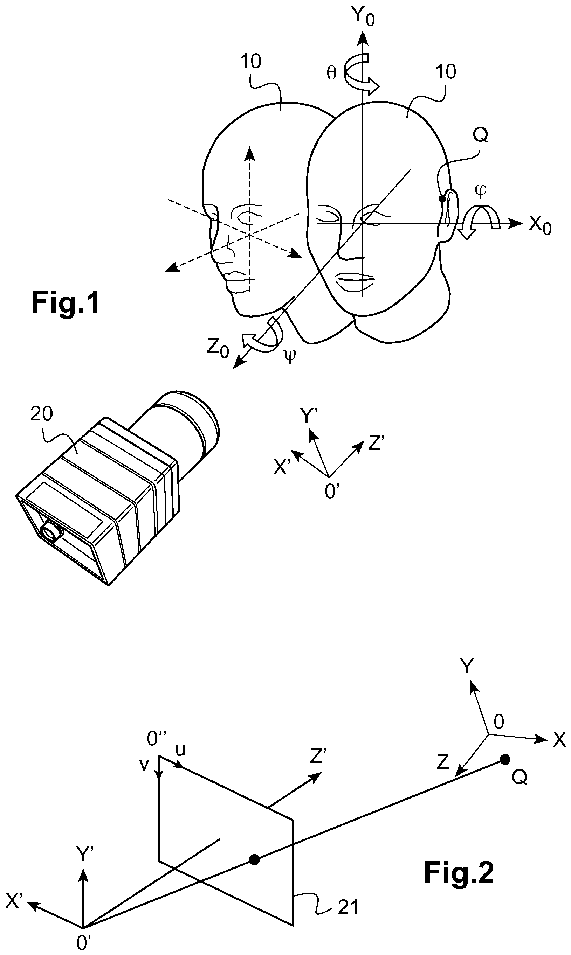

Comme le montre la figure 1, le véhicule automobile est particulier en ce sens qu'il comporte une caméra thermique 20 orientée vers la tête 10 du conducteur, et un calculateur adapté à traiter les images acquises par la caméra thermique.

Une caméra thermique étant un objet bien connu de l'homme du métier, elle ne sera pas ici décrite en détail. On précisera seulement que cette caméra est adaptée à acquérir des images du visage du conducteur dans le domaine de l'infrarouge thermique, c'est-à-dire dans une bande de longueurs d'ondes comprise entre 8000 et 14000 nm.

Puisqu'il est bien connu d'utiliser des calculateurs dans les véhicules automobiles, le calculateur utilisé ne sera pas ici décrit en détail. On précisera seulement qu'il comporte un processeur, une mémoire vive et une mémoire morte qui stocke une base de données dont les caractéristiques seront précisées dans la suite de cet exposé.

Avant de décrire en détail le procédé faisant l'objet du présent exposé, on pourra définir des notions qui seront utiles à la compréhension de l'invention.

La tête 10 du conducteur sera ici considérée comme un objet rigide, afin de réduire la puissance de calcul nécessitée pour la mise en œuvre de l'invention.

On peut définir la « pose » de la tête 10 du conducteur comme étant la posture de la tête 10 par rapport à la caméra thermique 20. Cette pose se caractérise donc par une matrice de rotation et par un vecteur de translation, par rapport à une pose de référence ici appelée pose canonique.

La « pose canonique » est définie comme la pose naturelle adoptée par le conducteur qui regarde la route dans la situation où le véhicule suit une trajectoire en ligne droite.

Comme le montrent les figures 1 et 2, chaque point Q de la tête 10 du conducteur pourra s'exprimer dans :

- un repère attaché à la tête 10 du conducteur (appelé repère humain $O_0$, $X_0$, $Y_0$, $Z_0$),
- un repère terrestre O, X, Y, Z,
- un repère attaché à la caméra thermique 20 (appelé repère caméra O', X', Y', Z') ou
- un repère bidimensionnel situé dans le plan-focal 21 de la caméra thermique 20 (appelé repère bidimensionnel O", u, v).

Sur le repère humain $O_0$, $X_0$, $Y_0$, $Z_0$, on a représenté trois angles d'Euler $\varphi$, $\theta$, $\Psi$. Ils permettent d'orienter un objet dans ce repère, par un angle $\varphi$ autour de l'axe $X_0$, un angle $\theta$ autour de l'axe $Y_0$, et un angle $\Psi$ autour de l'axe $Z_0$.

En généralisant l'utilisation de des angles d'Euler $\varphi$, $\theta$, $\Psi$ à chacun des repères considérés, on peut définir une matrice de rotation R de changement de repères, qui permet d'exprimer les coordonnées d'un point dans un repère orienté par rapport à un autre, de la manière suivante :

$R = R_x.R_y.R_z$, avec

$$R_x(\varphi) = \begin{pmatrix} 1 & 0 & 0 \\ 0 & \cos\varphi & -\sin\varphi \\ 0 & \sin\varphi & \cos\varphi \end{pmatrix}$$

$$R_y(\theta) = \begin{pmatrix} \cos\theta & 0 & \sin\theta \\ 0 & 1 & 0 \\ -\sin\theta & 0 & \cos\theta \end{pmatrix}$$

$$R_z(\psi) = \begin{pmatrix} \cos\psi & -\sin\psi & 0 \\ \sin\psi & \cos\psi & 0 \\ 0 & 0 & 1 \end{pmatrix}$$

On pourra alors écrire :

$$R = R_x . R_y . R_z = \begin{pmatrix} r_{11} & r_{12} & r_{13} \\ r_{21} & r_{22} & r_{23} \\ r_{31} & r_{32} & r_{33} \end{pmatrix}$$

Le vecteur de translation T de changement de repères, qui permet d'exprimer un point dans un repère translaté par rapport à un autre, peut être défini de la manière suivante :

$$T = [t_1, t_2, t_3]^T$$

Dans l'application qui nous intéresse ici, le changement de repères depuis le repère humain jusqu'au repère caméra est exprimé par une rotation suivie d'une translation. On utilise alors les notations suivantes :

$$[R|T] = \begin{pmatrix} r_{11} & r_{12} & r_{13} & t_1 \\ r_{21} & r_{22} & r_{23} & t_2 \\ r_{31} & r_{32} & r_{33} & t_3 \end{pmatrix}$$

Cette matrice peut alors définir complètement la pose de la tête 10 du conducteur. C'est la raison pour laquelle, dans la suite de cet exposé, on écrira « la pose [R|T] de la tête 10 du conducteur ».

Pour modéliser la projection d'un point exprimé dans le repère caméra (tridimensionnel) vers le repère du plan-focal 21 de la caméra thermique 20, on utilise des coordonnées homogènes. On peut ainsi représenter la projection par une matrice K où

$$K = \begin{pmatrix} \alpha & 0 & u_0 \\ 0 & \alpha & v_0 \\ 0 & 0 & 1 \end{pmatrix},$$

avec

- $\alpha$ = k.f, k étant la densité de pixels par millimètre et f étant la focale de la caméra thermique 20 exprimée en millimètres,
- $u_0$ et $v_0$ étant les coordonnées du centre optique en pixels dans le repère du plan-focal 21.

En résumé, le modèle complet utilisé permet d'exprimer les coordonnées d'un point Q dans le plan-focal 21, à un facteur d'échelle près, avec l'expression :

$$\begin{bmatrix} u \\ v \\ 1 \end{bmatrix} = r . \begin{pmatrix} \alpha & 0 & u_0 & 0 \\ 0 & \alpha & v_0 & 0 \\ 0 & 0 & 1 & 0 \end{pmatrix} . \begin{pmatrix} r_{11} & r_{12} & r_{13} & t_1 \\ r_{21} & r_{22} & r_{23} & t_2 \\ r_{31} & r_{32} & r_{33} & t_3 \\ 0 & 0 & 0 & 1 \end{pmatrix} . \begin{bmatrix} X \\ Y \\ Z \\ 1 \end{bmatrix}$$

Comme cela a été expliqué supra, l'objet de la présente invention est d'obtenir à chaque instant la pose [R|T]

de la tête 10 du conducteur du véhicule, grâce aux seules images acquises par la caméra thermique 20.

Or, lorsque le visage du conducteur est filmé, chaque image $Img_i$ acquise correspond à la projection de la tête 10 dans le plan-focal 21 de la caméra thermique 20.

On cherche donc à remonter à une information tridimensionnelle compte tenu des informations bidimensionnelles fournies par la caméra thermique 20.

Le procédé de détermination de la pose [R|T] de la tête 10 du conducteur de véhicule se basera alors sur le traitement de chaque image $Img_i$ acquise par la caméra thermique 20, qui consistera à y repérer des points particuliers $P_i$ de la tête 10 du conducteur, et à en déduire les différents coefficients de la matrice [RIT].

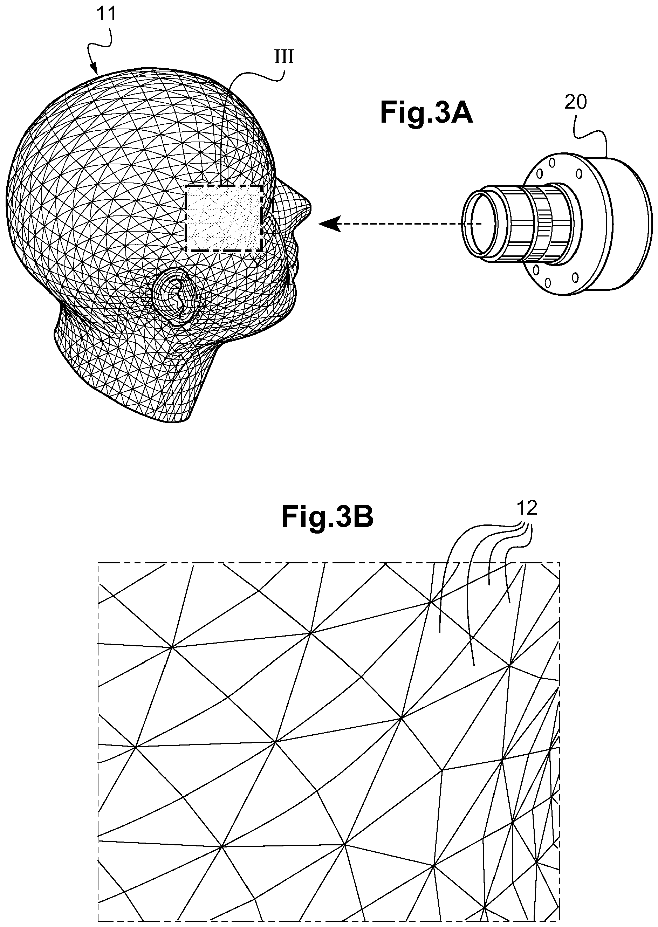

On s'intéressera ici successivement à deux modes de réalisation de ce procédé, dont l'un se basera sur l'analyse de l'évolution au cours du temps de la forme des images acquises, tandis que l'autre se basera sur une comparaison de l'image acquise considérée avec une modélisation tridimensionnelle 11 (figure 3A) de la tête 10 du conducteur.

On peut tout d'abord s'intéresser au premier mode de réalisation du procédé de détermination de la pose [R|T] de la tête 10 du conducteur.

Dans ce premier mode, il sera prévu d'acquérir successivement des images $Img_i$ de la tête 10 du conducteur depuis une pose connue, ici depuis la pose canonique.

Plus précisément, la caméra thermique 20 acquiert à intervalles réguliers (par exemple à une fréquence de 18 Hz) des images $Img_i$ de la tête 10 du conducteur. Ces images sont ici acquises en niveaux de gris (chaque pixel sera plus ou moins foncé en fonction de la quantité de flux électromagnétique dans la bande de longueurs d'onde thermique reçue par la caméra thermique 20).

Deux images successivement acquises seront ici notées $Img_i$, $Img_{i+1}$.

Il sera alors prévu :

- de déterminer le mouvement de la tête 10 par rapport à la caméra thermique 20 entre deux images (préférentiellement entre deux images successives), puis
- de calculer la somme des mouvements de la tête depuis la pose canonique, afin d'en déduire la pose [R|T] instantanée de la tête 10 du conducteur.

Pour déterminer le mouvement de la tête 10 entre deux images successives $Img_i$, $Img_{i+1}$, le calculateur va traiter ces deux images de manière à :

i) sélectionner les parties des images sur lesquelles apparaissent le visage du conducteur,
ii) rechercher des points particuliers du visage que l'on retrouve sur les deux images, et
iii) déduire le mouvement de la tête 10 du conducteur en fonction du déplacement de ces points particuliers entre les deux images.

Plus précisément, au cours d'une première opération i), le calculateur sélectionne la partie de chaque image $Img_i$, $Img_{i+1}$ sur laquelle apparait le visage du conducteur.

Il applique pour cela un filtre à chaque image $Img_i$, $Img_{i+1}$, qui va ici consister à sélectionner les pixels de l'image dont les niveaux de gris sont compris entre deux seuils de niveaux de gris prédéterminés. On tire ici partie du fait qu'avec les images acquises par la caméra thermique, la peau présente un niveau de gris qui varie peu quelles que soient les conditions de luminosité ou la couleur de peau du conducteur et la variation d'inclinaison, jusque dans une certaine limite, de la surface émettrice de la peau par rapport au plan de l'imageur.

En variante, on aurait pu utiliser une autre méthode, par exemple une méthode dite de « minimisation interclasse de la variance de l'histogramme ». Pour réaliser ce filtrage, on aurait aussi pu tirer partie du fait que le visage possède une forme proche d'une ellipse. On pourrait aussi tirer partie que l'image sans conducteur est connue (véhicule vide).

Quoi qu'il en soit, à l'issue de cette première opération, seule la partie de chaque image $Img_i$, $Img_{i+1}$ correspondant au visage du conducteur est conservée (sont exclus de l'image l'arrière-plan, les vêtements du conducteur, ...).

Au cours d'une seconde opération ii), le calculateur va analyser chaque image $Img_i$, $Img_{i+1}$ pour repérer sur ces images des points de repères. Il peut par exemple s'agir de points de repères liés à la forme du visage (coins des yeux, point hauts des oreilles, encoignures des lèvres, ...) ou de points de repères liés à un gradient de niveau de gris particulier dans une zone de l'image.

On utilise ici pour cela deux opérateurs mathématiques respectivement appelés « détecteur » et « descripteur ».

Le détecteur permet de repérer des points particuliers $P_i$, $P_{i+1}$ sur chaque image $Img_i$, $Img_{i+1}$.

Un exemple de détecteur est connu sous l'acronyme DoG (de l'anglais « Difference of Gaussian »).

Le descripteur permet quant à lui de caractériser ces points particuliers $P_i$, $P_{i+1}$ indépendamment de l'échelle de l'image et de l'orientation de la tête 10.

Des exemples de descripteurs, appelés SIFT (de l'anglais « Scale-Invariant Feature Transform ») ou ASIFT (de l'anglais « Affine-SIFT ») sont par exemples décrits dans les documents :

- Lowe, D. G. (1999). Object récognition from local scale-invariant features. In Computer vision, 1999. The proceedings of the seventh IEEE international conférence on (Vol. 2, pp. 1150-1157). Ieee.
- Yu, G., & Morel, J. M. (2011). Asift: An algorithm for fully affine invariant comparison. Image Processing On Line, 1.

Grâce à la caractérisation des points particuliers $P_i$, $P_{i+1}$ faite par le descripteur, il est ensuite possible de détecter des points du visage qui ont été repérés sur les deux images $Img_i$, $Img_{i+1}$. Deux points particuliers $P_i$, $P_{i+1}$ respectivement situés sur les deux images $Img_i$, $Img_{i+1}$ et qui correspondent à un même point du visage sont dits « appariés ».

Ainsi, le calculateur peut apparier une partie au moins des points particuliers $P_i$ de la première image $Img_i$ avec des points particuliers $P_{i+1}$ de l'autre image $Img_{i+1}$.

Au cours d'une troisième opération iii), le calculateur estime l'ampleur du mouvement de la tête 10 du conducteur entre les instants $t_i$, $t_{i+1}$ où les deux images $Img_i$, $Img_{i+1}$ ont été acquises.

C'est ici au moyen de la géométrie multi-vues que la calculateur va pouvoir caractériser ce changement de poses.

En effet, la géométrie multi-vues nous enseigne qu'il existe une matrice fondamentale F qui contraint la mise en correspondance de points. Cette contrainte appelée, contrainte épipolaire, peut être définie ainsi :
soit ($P_i$, $P_{i+1}$) un couple de points particuliers appariés dont les coordonnées homogènes sont ($u_i$,$v_i$) et ($U_{i+1}$, $V_{i+1}$), la matrice fondamentale F qui contraint la mise en correspondance de ces points particuliers doit vérifier :

$$(u_{i+1},v_{i+1})^T . F . (u_i,v_i) = 0$$

Différents algorithmes existent pour calculer la matrice fondamentale F à partir d'un ensemble de mises en correspondances, parmi lesquels deux sont décrits dans les documents :

- Stewenius, H., Engels, C., & Nistér, D. (2006). Recent developments on direct relative orientation. ISPRS Journal of Photogrammetry and Remote Sensing, 60(4), 284-294,
- Hartley, R. I. (1997). In defense of the eight-point algorithm. Pattern Analysis and Machine Intelligence, IEEE Transactions on, 19(6), 580-593.

On observera que ces algorithmes nécessitent, pour déterminer la matrice fondamentale F, entre 5 et 8 couples de points particuliers.

La connaissance des paramètres intrinsèques de la caméra thermique 20 et de cette matrice fondamentale F permet ensuite de déterminer la matrice de rotation R et le vecteur de translation T, dont on rappelle qu'ils permettent de définir le changement de poses (c'est-à-dire le mouvement) de la tête 10 du conducteur entre les deux instants $t_i$, $t_{i+1}$.

Une fois cette matrice de rotation R et ce vecteur de translation T connus, le calculateur détermine la pose absolue de la tête 10 du conducteur. Pour cela, la calculateur va multiplier les matrices de rotation R et additionner les vecteurs de translation T depuis l'instant où la tête du conducteur se trouvait dans la pose canonique jusqu'à l'instant présent.

Ainsi le calculateur pourra obtenir une estimation de la pose [R|T] de la tête 10 du conducteur.

On notera que pour s'assurer du bon fonctionnement de ce procédé, il pourra par exemple être demandé au conducteur d'adopter la pose canonique à chaque démarrage du véhicule.

En variante, le calculateur pourrait utiliser un algorithme de reconnaissance automatique de la pose canonique. Alors le procédé pourra être mis en œuvre dès que le calculateur repère qu'à un instant donné, le conducteur adopte la pose canonique.

Cette variante est préférée. En effet, on constate que le calcul des mouvements relatifs de la tête 10 du conducteur ne sont pas exempts d'erreurs. Les erreurs vont alors se cumuler au moment où le calculateur réalise la somme des mouvements relatifs de la tête du conducteur pour trouver la pose absolue [R|T] de la tête 10 du conducteur.

L'algorithme de reconnaissance automatique de la pose canonique va alors permettre de pouvoir réinitialiser le procédé à chaque fois que la tête du conducteur est détectée comme étant en pose canonique.

Pour optimiser le procédé, on va également chercher à réduite l'erreur obtenu lors de chaque calcul du mouvement relatif de la tête 10 du conducteur. On va plus précisément chercher à optimiser la détermination de la matrice de rotation R et du vecteur de translation T permettant de caractériser le mouvement de la tête 10 entre les instants $t_i$ et $t_{i+1}$.

Comme on l'a vu, pour déterminer la matrice de rotation R et le vecteur de translation T, le calculateur considère entre cinq et huit couples de points particuliers $P_i$, $P_{i+1}$ appariés.

On pourra ici prévoir de répéter le calcul de la matrice de rotation R et du vecteur de translation T, en considérant à chaque fois un autre ensemble de cinq à huit couples de points particuliers $P_i$, $P_{i+1}$ appariés.

Les ensembles pourront être disjoints, pour limiter le nombre de calculs à réaliser.

Alors, le calculateur pourra sélectionner la meilleure estimation de la matrice de rotation R et du vecteur de translation T de la manière suivante.

Considérant chaque estimation de la matrice de rotation R et du vecteur de translation T obtenue au moyen d'une ensemble de couples de points particuliers $P_i$, $P_{i+1}$ appariés, on pourra appliquer ces matrices à tous les autres points particuliers $P_i$ de la première image $Img_i$ afin d'obtenir des points estimés $P_{i+1}'$.

La calculateur pourra alors calculer l'écart de position entre le point estimé $P_{i+1}'$ et le point particulier $P_{i+1}$ de la seconde image $Img_{i+1}$ qui est appariés au point particulier $P_i$ considéré.

Compte tenu de la moyenne des écarts ainsi obtenus, le calculateur pourra calculer une note associée à l'estimation de la matrice de rotation R et du vecteur de translation T considérés.

Le calculateur pourra alors sélectionner l'estimation de la matrice de rotation R et du vecteur de translation T pour laquelle la note est la plus faible.

Cette méthode de correction permet ainsi d'éviter de considérer des points particuliers appariés par erreur, soit par la faute du descripteur, soit par la faute de mouvements du visage dont nous avons fait l'hypothèse qu'il était rigide.

Une telle méthode de correction itérative est par exemple connue sous la dénomination RANSAC (de l'anglais « RANdom Sample Consensus »), notamment des documents :

- Kovesi, P. D. (2000). MATLAB and Octave functions for computer vision and image processing,
- Esteban, I., Dijk, J., & Groen, F. (2010, October). Fit3d toolbox: multiple view geometry and 3d reconstruction for matlab. In Security+ Defence (pp. 78350J-78350J). International Society for Optics and Photonics, et
- Rabaud V. (2000). MATLAB functions for computer vision and image processing.

On peut maintenant s'intéresser au second mode de réalisation du procédé conforme à l'invention.

Dans ce second mode, on ne considère plus une succession d'images pour déterminer la pose [R|T] instantanée et absolue de la tête 10 du conducteur. On considère au contraire une seule et unique image $Img_i$ que l'on compare à une modélisation tridimensionnelle 11 (figure 3A) de la tête 10 du conducteur.

Cette méthode, pour être mise en œuvre, nécessite toutefois une phase d'initialisation qui sera réalisée véhicule à l'arrêt par le conducteur, ou lors de la conception du véhicule.

Cette phase d'initialisation permettra de modéliser la tête 10 du conducteur et de stocker des données dans la mémoire du calculateur afin que ce dernier puisse ensuite mettre en œuvre le procédé de détermination de la pose [R|T] instantanée de la tête 10 du conducteur.

Au cours de la phase d'initialisation, comme le montre la figure 3A, le calculateur acquiert une modélisation tridimensionnelle 11 de la tête 10 du conducteur.

Il s'agit d'une modélisation géométrique de la tête du conducteur.

On pourrait prévoir que cette modélisation tridimensionnelle 11 soit générique. Ainsi, les concepteurs du véhicule pourraient choisir d'implémenter une modélisation tridimensionnelle 11 qui soit adaptée à l'ensemble des conducteurs, quelle que soit la morphologie de leurs visages.

En pratique, une telle modélisation tridimensionnelle générique est difficile à concevoir et ne permet pas d'obtenir des résultats aussi fiables que souhaités.

C'est pourquoi, cette modélisation tridimensionnelle 11 sera de préférence élaborée de manière à être aussi proche que possible de la forme de la tête 10 du conducteur.

Ici, cette modélisation tridimensionnelle 11 sera construite au moment de l'achat du véhicule, à l'aide d'un scanner tridimensionnel.

Cette modélisation tridimensionnelle 11 sera ici obtenue en maillant la tête 10 du conducteur au moyen de motifs identiques, qui sont ici formés de facettes triangulaires 12 (voir figure 3B). Elle sera définie par les coordonnées des sommets de ces facettes triangulaires 12.

Une fois la modélisation tridimensionnelle 11 obtenue, le calculateur va chercher à appliquer une texture 12 sur une partie au moins de cette modélisation tridimensionnelle 11.

Cette texture est formée par une partie d'une image de la tête du conducteur acquise par la caméra thermique 20.

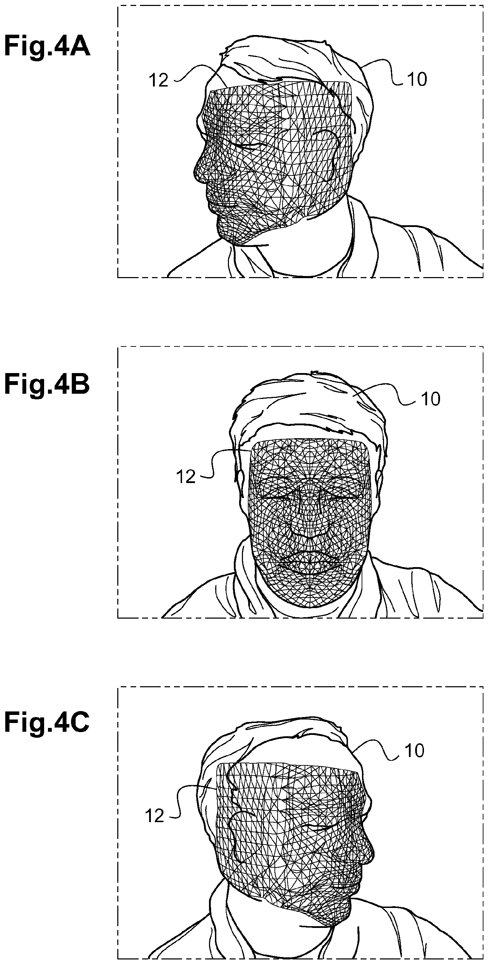

Pour ce faire, comme le montrent les figures 4A à 4C, le calculateur commande la caméra thermique 20 pour qu'elle acquière trois photos de la tête du conducteur, une de face (en pose canonique), une du côté gauche et une du côté droit.

Les paramètres intrinsèques de la caméra thermique 20 sont connus, mais les paramètres extrinsèques (la matrice de rotation R et le vecteur T) qui définissent le passage du repère caméra au repère objet ne sont pas connues. La découpe de chaque partie d'image acquise afin d'apposer une texture sur la facette triangulaire 12 correspondante de la modélisation tridimensionnelle 11 nécessite la connaissance des paramètres intrinsèques et intrinsèques. La détermination des paramètres extrinsèques peut être vue comme une étape d'alignement entre la projection de la modélisation tridimensionnelle 11 et l'image acquise par la caméra thermique 20. Cette étape d'alignement peut être réalisée manuellement, mais il existe des méthodes pour la rendre automatique qui font généralement appel à une phase d'apprentissage pendant laquelle l'algorithme est entrainé à reconnaitre au moins des parties du visage à partir d'images annotées. Le problème revient en fait à estimer la pose (matrice de rotation R et vecteur de translation T) de manière grossière. Dans le domaine de longueurs d'onde visible on peut se référer, par exemple, à méthode décrite dans :

- Zhu, X., & Ramanan, D. (2012, June). Face détection, pose estimation, and landmark localization in the wild. In Computer Vision and Pattern Récognition (CVPR), 2012 IEEE Conférence on (pp. 2879-2886). IEEE.

Pour assurer une bonne qualité de texture, on pourra ici ne considérer que les parties des trois images thermiques du conducteur au niveau desquelles la normale à la peau du conducteur fait un angle inférieur à un seuil en valeur absolue avec l'axe de la caméra thermique 20.

Au cours d'une étape suivante, le calculateur va générer une pluralité d'images de synthèse $Img\_s_j$ bidimensionnelles, correspondant à la projection de la modélisation tridimensionnelle 11 texturée dans une pluralité de plans de projection inclinés les uns par rapport aux autres.

Ici, le calculateur crée 105 images de synthèse $Img\_s_j$ en projetant la modélisation tridimensionnelle 11 texturée dans un premier plan qui est orthogonal à la direction du regard du conducteur dans la pose canonique, puis dans 104 autres plans qui sont inclinés par rapport à ce premier plan selon les angles suivants :

$$\theta = \{-50°, -45°, ..., +45°, +50°\}$$
$$\varphi = \{-10°, -5°, 0°, +5°, +10°\}$$
$$\Psi = 0°$$

Puis, comme dans le premier mode de réalisation décrit supra, le calculateur applique à chaque image de synthèse $Img\_s_j$ ainsi obtenue un détecteur de points particuliers $P\_s_j$ et un descripteur.

Le calculateur peut alors stocker, dans 105 enregistrements d'une base de données chacun associé à l'une desdites images de synthèse $Img\_s_j$ :

- les positions et les descriptions des points particuliers $P\_s_j$ repérés sur cette image de synthèse $Img\_s_j$, et
- les angles $\theta$, $\varphi$, $\psi$ pour former cette image de synthèse $Img\_s_j$.

A ce stade, la phase d'initialisation est achevée.

La base de données mémorise en effet des données qui vont pouvoir être comparées avec chaque image acquise de la tête 10 du conducteur. L'utilisation d'une caméra thermique permet en effet de comparer cette image aux données mémorisées, puisque les conditions extérieures affectent très peu les images acquises. Autrement formulé, même si sur l'image acquise le conducteur est très éclairé par une lumière rasante alors que pendant la phase d'initialisation, le conducteur se trouvait à l'ombre lorsque les trois images thermiques ont été capturées, il sera malgré cela possible de comparer ces informations car ces dernières seront très peu affectées par le changement de luminosité.

Le procédé de détermination de la pose absolue de la tête 10 du conducteur peut alors commencer. Il comporte plusieurs étapes successives. Ce procédé est mis en œuvre à intervalles réguliers (par exemple à une fréquence de 18 Hz), de façon à connaître en continu (de manière quasi instantanée) la pose absolue de la tête 10 du conducteur.

Au cours d'une première étape, le calculateur acquiert, via la caméra thermique 20, une image $Img_i$ de la tête 10 du conducteur.

L'image $Img_i$ peut éventuellement être filtrée, pour supprimer le bruit spatial typique des caméras thermiques non-refroidies et/ou pour ne conserver que la partie qui correspond au visage du conducteur.

Au cours d'une seconde étape, le calculateur recherche et caractérise les points particuliers $P_i$ de cette image $Img_i$.

Pour cela, le calculateur utilise nécessairement le même détecteur et le même descripteur que ceux qui ont été utilisés pendant la phase d'initialisation.

Au cours d'une troisième étape, le calculateur considère chaque enregistrement de la base de données pour tenter d'apparier chaque point particulier $P_i$ de l'image $Img_i$ avec l'un des points particuliers $P\_s_j$ mémorisés dans l'enregistrement considéré de la base de données. Comme dans le premier mode de réalisation, cet appariement va être effectué, compte tenu des caractéristiques associées à chaque point particulier $P_i$, $P\_s_j$.

Cette troisième étape est donc mise en œuvre 105 fois, en comparant donc l'image $Img_i$ avec chaque image de synthèse $Img\_s_j$ (ou plus précisément avec les données mémorisées dans chaque enregistrement associé à une image de synthèse).

Au cours de cette troisième étape, il peut apparaître des erreurs d'appariement : des points particuliers $P_i$ de

l'image Img$_i$ peuvent être associés à tort à des points particuliers P_s$_j$ de l'image de synthèse Img_s$_j$ considérée.

Pour filtrer ces erreurs, il est prévu deux opérations (successives ou alternatives) de filtrage.

La première opération de filtrage est opérée sur chaque couple de points particuliers P$_i$, P_s$_j$ appariés. Elle consiste à :

- sélectionner chaque pixel situé dans une fenêtre prédéterminée autour de chacun de ces points particuliers P$_i$, P_s$_j$,
- calculer la moyenne des niveaux de gris des pixels sélectionnés autour de chacun de ces points particuliers P$_i$, P_s$_j$, et
- comparer les deux moyennes obtenues.

Si l'écart entre ces deux moyennes dépasse un seuil prédéterminé, l'appariement est considéré comme erroné.

Ici, la fenêtre utilisée pourra présenter une forme d'étoile inscrite dans un carré dont le côté mesure 9 pixels, comme cela est bien décrit dans le document « Tan, C., Wang, H., & Pei, D. (2010). SWF-SIFT approach for infrared face récognition. Tsinghua Science & Technology, 15(3), 357-362 ».

La seconde opération de filtrage repose sur l'hypothèse selon laquelle le nombre d'appariements erronés est sensiblement inférieur au nombre de d'appariements corrects.

Cette seconde opération consiste à :

- déterminer des « vecteurs de d'appariement » reliant chacun deux points particuliers P$_i$, P_s$_j$ appariés (ce qui suppose de « superposer » au préalable les deux images Img$_i$, Img_s$_j$),
- calculer la moyenne des normes et la moyenne des orientations de ces vecteurs d'appariement, respectivement notées m$_{norme}$, m$_{orientation}$,
- contrôler que l'appariement de chaque couple de points particuliers P$_i$, P_s$_j$ est correct en vérifiant que la norme et l'orientation de leur vecteur d'appariement ne s'écarte pas trop de ces moyennes.

On pourra ainsi considérer que l'appariement est correct si sa norme et son orientation vérifie les deux conditions suivantes :

$$\begin{cases} |norme - m_{norme}| < 0{,}4.\,\sigma_{norme} \\ |orientation - m_{orientation}| < 0{,}4.\,\sigma_{orientation} \end{cases},$$

avec

$\sigma_{norme}$ l'écart-type entre les normes des vecteurs d'appariement,
$\sigma_{orientation}$ l'écart-type entre les orientations des vecteurs d'appariement.

Cette troisième étape est donc répétée 105 fois pour apparier les points particuliers P$_i$ de l'image Img$_i$ avec les points particuliers P_s$_j$ de chaque image de synthèse Img_s$_j$ (dont les caractéristiques sont mémorisées dans les 105 enregistrements de la base de données).

Lors d'une quatrième étape, le calculateur sélectionne l'enregistrement pour lequel l'appariement des points particuliers P$_i$ de l'image Img$_i$ avec les points particuliers P_s$_j$ de l'image de synthèse Img_s$_j$ associée est le meilleur, et il en déduit la pose [R|T] de la tête 10 du conducteur.

Cette quatrième étape pourra être mise en œuvre selon l'une ou l'autre des deux méthodes suivantes.

La première méthode (qui est une version simplifiée de la seconde) consistera simplement à :

- sélectionner l'enregistrement pour lequel le plus grand nombre d'appariement a été trouvé, puis à
- lire dans cet enregistrement les angles θ, φ, ψ, et à
- en déduire la matrice de rotation R.

La matrice de translation T pourra quant à elle être obtenue compte tenu de la moyenne des normes et la moyenne des orientations des vecteurs de d'appariement.

La seconde méthode sera plus complexe et plus fiable.

Pour la mettre en œuvre, le calculateur détermine, pour chacun des 105 enregistrements de la base de données, une estimation de la pose [R|T] de la tête 10 du conducteur, à partir des coordonnées 3D des points qui correspondent aux points particuliers P_s$_j$ de l'image de synthèse Img_s$_j$ considérée. Le calculateur peut pour cela par exemple utiliser la méthode décrite dans le document « Li, S., Xu, C., & Xie, M. (2012). A robust O (n) solution to the perspective-n-point problem. Pattern Analysis and Machine Intelligence, IEEE Transactions on, 34(7), 1444-1450 ».

Il obtient ainsi 105 estimations de la pose [R|T].

Pour chacune de ces poses, le calculateur calcule des « erreurs de re-projection ». Une erreur de re-projection est la distance euclidienne entre, d'une part, le point particulier $P_i$ de l'image $Img_i$, et, d'autre part, le point de la modélisation tridimensionnelle 11 dont le projeté dans l'image de synthèse $Img\_s_j$ considérée est le point particulier $P\_s_j$ (celui qui est apparié au point particulier $P_i$).

Dans cette seconde méthode, deux critères sont considérés pour sélectionner la meilleure estimation de la pose [R|T] de la tête 10 du conducteur.

Le premier critère est ici encore le nombre $N_{jum}$ de points particuliers $P_i$, $P\_s_j$ entre l'image $Img_i$ et l'image de synthèse $Img\_s_j$ considérée. Le second critère est la moyenne $M_{rep}$ des erreurs de re-projection pour l'image de synthèse $Img\_s_j$ considérée.

Une note est alors attribuée à chaque estimation de la pose [R|T] de la tête 10 du conducteur. Cette note pourra par exemple être définie selon la formule suivante :

$$note = \frac{1}{N_{jum}} + \frac{1}{1000}.M_{rep}$$

L'estimation sélectionnée sera celle dont la note sera la plus faible. On considérera alors que cette estimation correspond à la pose absolue [R|T] de la tête 10 du conducteur.

En résumé, le premier mode de réalisation du procédé de détermination de la pose [R|T] de la tête 10 du conducteur est plus simple à mettre en œuvre que le second mode. Il nécessite donc une puissance de calcul plus faible.

Le second mode de réalisation présente en revanche des résultats plus fiables dans la durée, puisque les erreurs ne se cumulent pas dans le temps comme cela peut être le cas dans le premier mode, notamment si le conducteur adopte rarement la pose canonique.

Par conséquent, dans une variante de réalisation de l'invention, on peut prévoir de mettre en œuvre les deux modes de réalisation en parallèle.

Le premier mode peut être mis en œuvre avec une fréquence élevée, tandis que le second mode peut être mis en œuvre avec une fréquence réduite. Les résultats du seconde mode pourront alors être utilisés pour recaler régulièrement les résultats du premier mode.

## Revendications

1. Procédé de détermination de la pose ([R|T]) de la tête (10) d'un conducteur de véhicule, comprenant des étapes de :

   a) acquisition d'au moins une image ($Img_i$) dans le domaine des infrarouges thermiques (LWIR), sur laquelle apparaît une partie au moins de la tête du conducteur,
   b) traitement de ladite image ($Img_i$) afin de repérer des points particuliers ($P_i$) de la tête (10) du conducteur, et
   c) détermination de la pose ([R|T]) de la tête (10) du conducteur, en fonction de la position des points particuliers ($P_i$) sur ladite image ($Img_i$),

   **caractérisé en ce qu'**il est prévu une phase préalable d'initialisation au cours de laquelle :

   - on acquiert une modélisation tridimensionnelle (11) de la tête (10) du conducteur,
   - on applique une texture (12) sur une partie au moins de ladite modélisation tridimensionnelle (11), compte tenu d'au moins une image acquise de la tête (10) du conducteur,
   - on génère une pluralité d'images de synthèse ($Img\_s_j$) bidimensionnelles, correspondant à la projection de ladite modélisation tridimensionnelle (11) texturée dans une pluralité de plans inclinés les uns par rapport aux autres,
   - on repère des points particuliers ($P\_s_j$) de la tête (10) du conducteur sur chaque image de synthèse ($Img\_s_j$),
   - on stocke dans dans des enregistrements distincts d'une mémoire informatique chacun associés à l'une desdites images de synthèse ($Img\_s_j$), des données qui sont issues de ladite modélisation tridimensionnelle (11) texturée et qui sont caractéristiques des points particuliers ($P\_s_j$) repérés sur l'image de synthèse ($Img\_s_j$) associée,

   et **en ce que** à l'étape c), on compare les points particuliers ($P_i$) repérés à l'étape b) avec les données stockées dans la mémoire informatique pour en déduire la pose ([R|T]) de la tête (10) du conducteur.

2. Procédé de détermination selon la revendication 1, dans lequel :

- les étapes a) et b) sont successivement mises en œuvre à intervalles déterminés, de manière à déterminer les mouvements successifs de la tête (10) du conducteur, et
- à l'étape c), la pose ([R|T]) de la tête (10) du conducteur est déterminée compte tenu des mouvements successifs de la tête (10) du conducteur depuis une pose connue ([$R_0$|$T_0$]).

**3.** Procédé de détermination selon la revendication 2, dans lequel, pour déterminer chacun des mouvements successifs de la tête (10) du conducteur au moyen de deux images ($Img_i$, $Img_{i+1}$) successivement acquises, il est prévu :

- de détecter, parmi les points particuliers ($P_i$) repérés sur l'une desdites deux images ($Img_i$), ceux qui correspondent aux mêmes points de la tête (10) du conducteur que des points particuliers ($P_{i+1}$) de l'autre des images ($Img_{i+1}$), ces points particuliers ($P_i$, $P_{i+1}$) étant qualifiés de appariés, puis
- de réaliser une estimation du mouvement de la tête du conducteur entre les deux images ($Img_i$, $Img_{i+1}$) en fonction du changement de position d'une partie au moins des points particuliers ($P_i$, $P_{i+1}$) appariés depuis l'une jusqu'à l'autre des deux images ($Img_i$, $Img_{i+1}$).

**4.** Procédé de détermination selon la revendication 3, dans lequel,

- il est prévu de réaliser plusieurs estimations du mouvement de la tête du conducteur entre lesdites deux images ($Img_i$, $Img_{i+1}$), en considérant à chaque fois un ensemble différent de points particuliers ($P_i$, $P_{i+1}$) appariés, puis
- de sélectionner la meilleure estimation du mouvement de la tête (10) du conducteur.

**5.** Procédé de détermination selon la revendication 4, dans lequel, pour sélectionner la meilleure estimation du mouvement de la tête (10) du conducteur :

- on applique, pour chaque estimation réalisée, le mouvement estimé à l'ensemble des points particuliers ($P_i$) d'une image ($Img_i$) qui sont appariés à un point particulier ($P_{i+1}$) de l'image ($Img_{i+1}$) successive, afin d'obtenir des points estimés ($P_{i+1}'$),
- on détermine des écarts de position entre chacun des points estimés ($P_{i+1}'$) et le point particulier ($P_{i+1}$) correspondant de l'image ($Img_{i+1}$) successive,
- on calcule, en fonction des écarts déterminés, une erreur associée à l'estimation considérée, et
- on sélectionne l'estimation pour laquelle l'erreur est la plus faible.

**6.** Procédé de détermination selon l'une des revendications précédentes, dans lequel :

- à l'étape b), il est prévu de déterminer des données caractéristiques des points particuliers ($P_i$) repérés sur l'image ($Img_i$) acquise à l'étape a), et
- à l'étape c), il est prévu de comparer les données caractéristiques déterminées à l'étape b) avec les données caractéristiques stockées dans chaque enregistrement de ladite mémoire informatique, puis de sélectionner l'enregistrement pour lequel les données caractéristiques stockées correspondent le mieux aux données caractéristiques déterminées à l'étape b), et d'en déduire une estimation de la pose ([R|T]) de la tête (10) du conducteur.r

**7.** Procédé de détermination selon la revendication précédente, dans lequel :

- la comparaison des données caractéristiques déterminées à l'étape b) avec les données caractéristiques stockées dans chaque enregistrement de ladite mémoire informatique consiste à détecter, parmi les points particuliers ($P_i$) repérés sur ($Img_i$) acquise à l'étape a), ceux qui correspondent aux mêmes points de la tête (10) du conducteur que des points particuliers ($P\_s_j$) repérés sur chaque image de synthèse ($Img\_s_j$) correspondante, ces points particuliers ($P_i$, $P\_s_j$) étant qualifiés d'appariés, et dans lequel
- l'enregistrement est sélectionné en fonction au moins du nombre de points particuliers ($P\_s_j$) appariés sur chaque image de synthèse ($Img\_s_j$).

**Patentansprüche**

**1.** Verfahren zur Bestimmung der Positionierung ([R|T]) des Kopfes (10) eines Fahrzeugfahrers mit den Schritten

a) Erfassen wenigstens eines Bilds (Img$_i$) im Bereich des thermischen Infrarots (LWIR), auf dem wenigstens ein Teil des Kopfes des Fahrers erscheint,
b) Verarbeiten des Bilds (Img$_i$), um besondere Punkte (P$_i$) des Kopfes (10) des Fahrers zu markieren, und
c) Bestimmen der Positionierung ([R|T]) des Kopfes (10) des Fahrers in Abhängigkeit von der Position der besonderen Punkte (P$_i$) auf dem Bild (Img$_i$),

**dadurch gekennzeichnet, daß** eine Vorlaufphase zur Initialisierung vorgesehen ist, in deren Verlauf

- ein dreidimensionales Modell (11) des Kopfes (10) erfaßt wird,
- unter Berücksichtigung wenigstens eines vom Kopf (10) des Fahrers erfaßten Bilds auf wenigstens einen Teil des dreidimensionalen Modells (11) eine Textur (12) angewendet wird,
- eine Anzahl zweidimensionaler synthetischer Bilder (Img_s$_j$) erzeugt wird, die der Projektion des texturierten dreidimensionalen Modells (11) auf eine Anzahl zueinander geneigter Ebenen entsprechen,
- auf jedem synthetischen Bild (Img_s$_j$) besondere Punkte (P_s$_j$) des Kopfes (10) des Fahrers markiert werden,
- in getrennten Einspeicherungen eines Informatikspeichers, von denen jede einem der synthetischen Bilder (Img_s$_j$) zugeordnet ist, Daten eingespeichert werden, die dem texturierten dreidimensionalen Modell (11) entstammen und die für die auf dem zugehörigen synthetischen Bild (Img_s$_j$) markierten besonderen Punkte (P_s$_j$) charakteristisch sind,

und daß im Schritt c) die im Schritt b) markierten besonderen Punkte (P$_i$) mit den im Informatikspeicher gespeicherten Daten verglichen werden, um daraus die Positionierung ([RIT]) des Kopfes (10) des Fahrers abzuleiten.

**2.** Bestimmungsverfahren gemäß Anspruch 1, bei dem

die Schritte a) und b) in bestimmten Intervallen aufeinanderfolgend durchgeführt werden, um die aufeinanderfolgenden Bewegungen des Kopfes (10) des Fahrers zu bestimmen, und
im Schritt c) die Positionierung ([R|T]) des Kopfes (10) des Fahrers unter Berücksichtigung der aufeinanderfolgenden Bewegungen des Kopfes (10) des Fahrers aus einer bekannten Position ([R$_0$|T$_0$]) heraus bestimmt wird.

**3.** Bestimmungsverfahren gemäß Anspruch 2, bei dem zum Bestimmen jeder der aufeinanderfolgenden Bewegungen des Kopfes (10) des Fahrers mittels zwei aufeinanderfolgend erfaßter Bilder (Img$_i$, Img$_{i+1}$) vorgesehen ist,

- unter den auf einem (Img$_i$) der beiden Bilder markierten besonderen Punkten (P$_i$) diejenigen herauszufinden, die den gleichen Punkten des Kopfes (10) des Fahrers entsprechen wie die besonderen Punkte (P$_{i+1}$) des anderen ($_{Imgi+}$1) der Bilder, wobei diese besonderen Punkte (P$_i$, P$_{i+1}$) als paarig eingestuft werden, und dann
- in Abhängigkeit von der Änderung der Position wenigstens eines Teils der paarigen besonderen Punkte (P$_i$, P$_{i+1}$) von einem zum anderen der beiden Bilder (Img$_i$, Img$_{i+1}$) eine Abschätzung der Bewegung des Kopfes des Fahrers zwischen den beiden Bildern (Img$_i$, Img$_{i+1}$) vorzunehmen.

**4.** Bestimmungsverfahren gemäß Anspruch 3, bei dem vorgesehen ist,

- mehrere Abschätzungen der Bewegung des Kopfes des Fahrers zwischen den beiden Bildern (Img$_i$, Img$_{i+1}$) vorzunehmen und dabei jedes Mal eine andere Gesamtheit von paarigen besonderen Punkten (P$_i$, P$_{i+1}$) zu berücksichtigen, dann
- die beste Abschätzung der Bewegung des Kopfes (10) des Fahrers auszuwählen.

**5.** Bestimmungsverfahren gemäß Anspruch 4, bei dem zum Auswählen der besten Abschätzung der Bewegung des Kopfes (10) des Fahrers

- für jede durchgeführte Abschätzung die geschätzte Bewegung auf die Gesamtheit der besonderen Punkte (P$_i$) eines Bilds (Img$_i$), die mit einem besonderen Punkt (P$_{i+1}$) des folgenden Bilds (Img$_{i+1}$) gepaart sind, angewendet wird, um geschätzte Punkte (P$_{i+1}$') zu erhalten,
- die Positionsabweichung zwischen jedem der geschätzten Punkte (P$_{i+1}$') und dem entsprechenden besonderen Punkt (P$_{i+1}$) des folgenden Bilds (Img$_{i+1}$) bestimmt wird,
- in Abhängigkeit von den bestimmten Abweichungen ein der betrachteten Abschätzung zugeordneter Fehler berechnet wird und
- die Abschätzung ausgewählt wird, bei der der Fehler am geringsten ist.

**6.** Bestimmungsverfahren gemäß einem der vorangehenden Ansprüche, bei dem

- im Schritt b) vorgesehen ist, charakteristische Daten der auf dem im Schritt a) erfaßten Bild (Img$_i$) markierten besonderen Punkte (P$_i$) zu bestimmen, und
- im Schritt c) vorgesehen ist, die im Schritt b) bestimmten charakteristischen Daten mit den bei jeder Einspeicherung des Informatikspeichers gespeicherten charakteristischen Daten zu vergleichen, dann die Einspeicherung auszuwählen, bei der die gespeicherten charakteristischen Daten den im Schritt b) bestimmten charakteristischen Daten am besten entsprechen, und daraus eine Abschätzung der Positionierung ([RIT]) des Kopfes (10) des Fahrers abzuleiten.

**7.** Bestimmungsverfahren gemäß dem vorangehenden Anspruch, bei dem

- das Vergleichen der im Schritt b) bestimmten charakteristischen Daten mit den bei jeder Einspeicherung des Informatikspeichers gespeicherten charakteristischen Daten darin besteht, unter den im Schritt a) auf dem erfaßten Bild (Img$_i$) markierten besonderen Punkten (P$_i$) jene zu entdecken, die den gleichen Punkten des Kopfes (10) des Fahrers entsprechen wie die auf jedem zugehörigen synthetischen Bild (Img_s$_j$) markierten besonderen Punkte (P_s$_j$), wobei diese besonderen Punkte (P$_i$, P_s$_j$) als paarig eingestuft werden, und bei dem
- die Einspeicherung in Abhängigkeit von wenigstens der Anzahl paariger besonderer Punkte (P_s$_j$) auf jedem synthetischen Bild (Img_s$_j$) ausgewählt wird.

**Claims**

**1.** Method for determining the placement ([R|T]) of the head (10) of a vehicle driver, comprising the steps consisting in:

a) acquiring at least an image (Img$_i$) in the thermal infrared range (LWIR), on which at least a part of the driver's head appears,
b) processing of said image (Img$_i$) in order to identify specific points (P$_i$) of the head (10) of the driver, and
c) determining the placement ([R|T]) of the head (10) of the driver, as a function of the position of the specific points (P$_i$) on said image (Img$_i$),

**characterised in that** a preliminary initialisation phase is provided during which:

- a three-dimensional modelling (11) of the head (10) of the driver is acquired,
- a texture (12) is applied on at least a part of said three-dimensional modelling (11), considering at least one acquired image of the head (10) of the driver,
- a plurality of two-dimensional synthesized images (Img_s$_j$) is generated, corresponding to the projection of said three-dimensional modelling (11) textured in a plurality of planes inclined from each other,
- specific points (P_s$_j$) of the head (10) of the driver are identified on each synthesized image (Img_s$_j$),
- data issued from said three-dimensional modelling (11) textured and characterised of the specific points (P_s$_j$) identified on the synthesized image (Img_s$_j$) is stored in the individual records of a computer memory, each associated to one of said synthesized images (Img_s$_j$),

in step c), the specific points (P$_i$) identified in step b) are compared with the data stored in the computer memory in order to derive the placement ([R|T]) of the head (10) of the driver.

**2.** Method for determining according to claim 1, wherein:

- the steps a) and b) are performed sequentially at predetermined intervals, in order to determine the successive movements of the head (10) of the driver, and
- in step c), the placement ([R|T]) of the head (10) of the driver is determined as a function of the successive movements of the head (10) of the driver from a known placement ([R$_0$|T$_0$]).

**3.** Method for determining according to claim 2, comprising, to determine each of the successive movements of the head (10) of the driver by means of two images (Img$_i$, Img$_{i+1}$) successively acquired, the steps consisting in:

- detecting, among the specific points (P$_i$) identified on one of said two images (Img$_i$), those which correspond to the same points of the head (10) of the driver as specific points (P$_{i+1}$) of the other of the images (Img$_{i+1}$),

these specific points ($P_i$, $P_{i+1}$) being qualified as matched, then
- carrying out an estimate of the movement of the driver's head between the two images ($Img_i$, $Img_{i+1}$) as a function of the change in position of at least a part of the specific points ($P_i$, $P_{i+1}$) matched from one to the other of the two images ($Img_i$, $Img_{i+i}$).

4. Method for determining according to claim 3, comprising the steps consisting in:

- carrying out several estimates of the movement of the driver's head between said two images ($Img_i$, $Img_{i+1}$), each time considering a different set of matched specific points ($P_i$, $P_{i+1}$), then
- selecting the best estimate of the movement of the head (10) of the driver.

5. Method for determining according to claim 4, comprising, to select the best estimate of the movement of the head (10) of the driver, the steps consisting in:

- applying, for each estimate made, the estimated movement to the set of specific points ($P_i$) of an image ($Img_i$) which are matched at a specific point ($P_{i+1}$) of the image ($Img_{i+1}$) successive, in order to obtain estimated points ($P_{i+1}'$),
- determining positional deviations between each of the estimated points ($P_{i+1}'$) and the corresponding specific point ($P_{i+1}$) of the successive image ($Img_{i+1}$),
- calculating an error associated with the considered estimate as a function of the determined deviations, and
- selecting the estimate for which the error is the smallest.

6. Method for determining according to one of the preceding claims, comprising the steps consisting in:

in step b), determining characteristic data of the specific points ($P_i$) identified on the image ($Img_i$) acquired in step a), and
in step c), comparing the characteristic data determined in step b) with the characteristic data stored in each record of said computer memory, then selecting the record for which the stored characteristic data correspond most closely to the characteristic data determined in step b), and to derive therefrom an estimate of the placement ([R|T]) of the head (10) of the driver.

7. Method for determining according to the preceding claim, wherein:
the comparison of the characteristic data determined in step b) with the characteristic data stored in each record of said computer memory consists in detecting, among the specific points ($P_i$) identified on ($Img_i$) acquired in step a), those which correspond to the same points of the head (10) of the driver as specific points ($P\_s_j$) identified on each corresponding synthesized image ($Img\_s_j$), these specific points ($P_i$, $P\_s_j$) being qualified as matched, and wherein

- the record is selected as a function of at least the number of specific points ($P\_s_j$) paired on each synthesized image ($Img\_s_j$).

**Fig.1**

**Fig.2**

11

III

**Fig.3A**

20

12

**Fig.3B**

**Fig.4A**

**Fig.4B**

**Fig.4C**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20130057671 A

**Littérature non-brevet citée dans la description**

- **TAKASHI KATO et al.** Détection of driver's posture in the car by using far infrared caméra. *IEEE INTELLIGENT VEHICLES SYMPOSIUM,* 14 Juin 2004
- Object récognition from local scale-invariant features. **LOWE, D. G.** Computer vision, 1999. The proceedings of the seventh IEEE international conférence on. Ieee, 1999, vol. 2, 1150-1157
- **YU, G. ; MOREL, J. M.** Asift: An algorithm for fully affine invariant comparison. *Image Processing On Line,* 2011, vol. 1
- **STEWENIUS, H. ; ENGELS, C. ; NISTÉR, D.** Recent developments on direct relative orientation. *ISPRS Journal of Photogrammetry and Remote Sensing,* 2006, vol. 60 (4), 284-294
- **HARTLEY, R. I.** In defense of the eight-point algorithm. Pattern Analysis and Machine Intelligence. *IEEE Transactions on,* 1997, vol. 19 (6), 580-593

- **KOVESI, P. D.** *MATLAB and Octave functions for computer vision and image processing,* 2000
- Fit3d toolbox: multiple view geometry and 3d reconstruction for matlab. **ESTEBAN, I. ; DIJK, J. ; GROEN, F.** Security+ Defence. International Society for Optics and Photonics, Octobre 2010, 78350J-78350J
- **RABAUD V.** *MATLAB functions for computer vision and image processing,* 2000
- Face détection, pose estimation, and landmark localization in the wild. **ZHU, X. ; RAMANAN, D.** Computer Vision and Pattern Récognition (CVPR), 2012 IEEE Conférence on. IEEE, Juin 2012, 2879-2886
- **TAN, C. ; WANG, H. ; PEI, D.** SWF-SIFT approach for infrared face récognition. *Tsinghua Science & Technology,* 2010, vol. 15 (3), 357-362
- **LI, S. ; XU, C. ; XIE, M.** A robust O (n) solution to the perspective-n-point problem. Pattern Analysis and Machine Intelligence. *IEEE Transactions on,* 2012, vol. 34 (7), 1444-1450